# EUROPÄISCHE PATENTSCHRIFT

(11) **EP 2 590 779 B1**
(45) Veröffentlichungstag und Bekanntmachung des Hinweises auf die Patenterteilung: **02.09.2015**
(21) Anmeldenummer: 11735831.7
(22) Anmeldetag: 06.07.2011
(51) Int. Cl.: B23Q 11/08, F16P 1/02, B27B 5/06

(54) **PLATTENAUFTEILANLAGE**
PANEL-DIVIDING SYSTEM
SYSTÈME DE DÉBITAGE DE PANNEAUX

(30) Priorität: 06.07.2010 DE 202010010266 U
(43) Veröffentlichungstag der Anmeldung: 15.05.2013
(73) Patentinhaber: HOLZMA Plattenaufteiltechnik GmbH, 75365 Calw-Holzbronn (DE)
(72) Erfinder: WEISSER, Stefan, 72218 Wildberg (DE)
(74) Vertreter: DREISS Patentanwälte PartG mbB
(86) Internationale Anmeldenummer: PCT/EP2011/061373
(87) Internationale Veröffentlichungsnummer: WO 2012/004288

(56) Entgegenhaltungen:
- EP-A1- 1 035 275
- EP-A2- 1 837 141
- DE-A1- 3 515 669
- DE-A1-102008 010 956
- DE-U1-202008 009 876
- US-A- 5 346 754
- US-A1- 2005 000 928

## Beschreibung

### Stand der Technik:

Die Erfindung betrifft eine Plattenaufteilanlage nach dem Oberbegriff des Anspruchs 1.

Plattenaufteilanlagen sind vom Markt her bekannt sowie aus der EP 1 837 141 A2. Sie ermöglichen es, plattenartige Werkstücke, vorzugsweise aus Holz, schnell und präzise zu sägen, zu fräsen, zu bohren oder in einer anderen passenden Weise zu bearbeiten. Diese Plattenaufteilanlagen weisen einen Maschinentisch und einen Zuführtisch auf, auf dem das Werkstück zugeführt beziehungsweise verarbeitet werden kann. Sie umfassen ferner eine Vorschubvorrichtung zum Bewegen des Werkstücks, einen oder mehrere Bearbeitungswagen, der eine oder mehrere Bearbeitungseinrichtungen zum Bearbeiten des Werkstücks trägt (beispielsweise eine Säge), sowie verschiedene Führungseinrichtungen.

Plattenaufteilanlagen arbeiten häufig programmgesteuert, so dass die Bearbeitung auch großer und schwerer Werkstücke sehr zügig erfolgen kann. Entsprechend können die Werkstücke auf dem Maschinentisch und/oder Zuführtisch maschinell schnell bewegt werden, woraus sich eine Gefahr für in der Umgebung der Plattenaufteilanlage beschäftigte Menschen ergeben kann.

Es ist bekannt, eine Plattenaufteilanlage mittels wandartiger Schutzvorrichtungen zumindest bereichsweise zu umgeben. Solche wandartigen Schutzvorrichtungen können beispielsweise feste Platten bzw. Bleche bzw. Gitter aus Holz oder Metall sein. Bekannt ist aus der DE 35 15 669 A1 eine Schutzwand zur Abschirmung eines Werkraums gegen umher fliegende Metallspäne. Die Schutzwand umfasst Gewebematten, die von einem Gestell mit Standfüßen getragen sind.

### Offenbarung der Erfindung:

Das der Erfindung zugrunde liegende Problem wird durch eine Plattenaufteilanlage nach Anspruch 1 gelöst. Vorteilhafte Weiterbildungen sind in Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Die erfindungsgemäße Plattenaufteilanlage hat den Vorteil, dass sie mittels einer Schutzvorrichtung mindestens bereichsweise geschützt werden kann, wobei die Schutzvorrichtung zugleich robust, einfach und leicht ausgeführt werden kann. Außerdem kann die erfindungsgemäße Schutzvorrichtung kostengünstig hergestellt werden, einfach montiert und ebenso für einen eventuellen Transport einfach zerlegt und platzsparend verstaut werden. Durch die Montage der Schutzvorrichtung am stationären Unterbau der Vorschubvorrichtung ist darüber hinaus eine sichere Verankerung gewährleistet, bei gleichzeitig äußerst geringem Platzbedarf (d.h., die Gesamtabmessungen der Anlage werden durch die Schutzvorrichtung kaum verändert). Auch sind keine zusätzlichen Maßnahmen an der Aufstellfläche erforderlich, da die Schutzvorrichtung integraler Bestandteil der Plattenaufteilanlage, und hier insbesondere der Vorschubvorrichtung ist.

Die Erfindung geht von der Erkenntnis aus, dass die Schutzvorrichtung vornehmlich dazu ausgebildet ist, um zumindest einen Bereich der Plattenaufteilanlage vor einem unbeabsichtigten Eingriff durch Menschen, bzw. umgekehrt die Menschen vor der Plattenaufteilanlage und den darauf bewegten Werkstücke zu schützen. Darüber hinaus sind Eigenschaften wie Festigkeit, Dichtigkeit oder Gewicht von sekundärer Bedeutung oder sogar nachteilig.

Daher wird die Schutzvorrichtung erfindungsgemäß auf ihre wesentliche Aufgabe beschränkt, nämlich einen Benutzer daran zu hindern, unabsichtlich in den Bereich des Zuführtisches zu greifen, und dies ohne dass eine komplexe und aufwändige statische Konstruktion erforderlich ist, indem die Schutzvorrichtung mindestens bereichsweise durch ein leichtes, flaches und flexibles Element gebildet wird. Dies wird beispielsweise in Gestalt eines Gewebes, einer Plane oder einer Folie realisiert, wobei auch andere leichte, flache und flexible Elemente eingesetzt werden können. Erfindungsgemäß kann das Gewebe, die Plane bzw. die Folie aus Textil, aus Metall und/oder aus Kunststoff hergestellt sein. Dabei kann das Gewebe, die Plane oder die Folie in einer Vielzahl von Ausführungen verarbeitet sein. Es kann im Wesentlichen homogen, durchbrochen und/oder gelocht sein. Ebenso kann das Gewebe, die Plane oder die Folie auch aus einzelnen Drähten oder einem Drahtgitter hergestellt sein, und kann metallische und/oder nichtmetallische Werkstoffe umfassen. Weiterhin kann das Gewebe, die Plane oder die Folie als dünnes Blech ausgeführt sein, welches gegebenenfalls auch grob oder fein gelocht sein kann.

Unter einem Gewebe wird ein nahezu beliebiges Material verstanden, welches in Form von Fasern, Fäden, Streifen, Drähten oder dergleichen gewirkt, gewebt, verknüpft, verflochten, verklebt oder verpresst ist, insbesondere textiles oder netzartiges Material.

Unter einer Plane wird ein nahezu beliebiges Material verstanden, welches flach, flexibel und im Wesentlichen homogen ist, wobei auch faserverstärkte Planen einsetzbar sind. Dabei ist es möglich, falls die Plane nicht bereits transparent ist, in die Plane auch - vorzugsweise regelmäßige - Aussparungen einzubringen. Eine besonders dünne Plane wird vorliegend als eine Folie bezeichnet.

Nachfolgend wird aus Gründen der Einfachheit der Begriff "Gewebe" stellvertretend bisweilen auch für die Materialformen "Plane" und "Folie" mit benutzt.

Das Tragwerk kann eine Mehrzahl von an dem Unterbau befestigten, vorzugsweise eingesteckten oder geschraubten Pfosten aufweisen, an denen das Gewebe, die Folie oder Plane gehalten ist. Steckbare Pfosten, ähnlich wie jene, die aus dem Zeltbau bekannt sind, ermöglichen eine individuelle und schnelle Anpassung der Abmessungen und/oder eine einfache Montage, beispielsweise in vorbereitete und vorzugsweise rasterartig angeordnete Bohrungen im Unterbau.

Die Bedienungssicherheit der Anlage wird erhöht, wenn das Gewebe, die Plane oder die Folie zumindest etwas und zumindest bereichsweise durchsichtig ist, da dann der Bediener jederzeit die Vorgänge auf dem Zuführtisch beobachten und beispielsweise eine Störung erkennen kann. Dabei genügt es, wenn der Bediener die Plattenaufteilanlage bzw. das darauf liegende Werkstück durch die Schutzvorrichtung hindurch wenigstens schemenartig erkennen kann, wie dies beispielsweise einem Blick durch ein Netzgewebe mit einer gewissen Maschenweite der Fall ist. Damit kann auch ohne eventuelle Aussparungen am Gewebe eine genügende Durchsichtigkeit naturgemäß erreicht werden.

Weiter wird vorgeschlagen, dass das Gewebe, die Plane oder die Folie ein PVC-Netzgitter ist. Damit kann ein handelsübliches und preisgünstiges Material verwendet werden, das die erforderliche Festigkeit und die wünschenswerte Transparenz bzw. Halbtransparenz in sich vereint.

Insbesondere sieht die Erfindung vor, dass die Schutzvorrichtung eine Aufspanneinrichtung umfasst, an der das Gewebe, die Plane oder die Folie aufgespannt ist. Beispielsweise kann das Gewebe - etwa nach der Art eines Tennisnetzes - mittels eines oder mehrerer Seile gehalten bzw. gespannt sein, wobei das Seil gegebenenfalls an einem Randabschnitt des Gewebes durch Nähen befestigt sein kann. Ebenso ist es erfindungsgemäß möglich, dass an bzw. in dem Randabschnitt des Gewebes eine Tasche angebracht ist, in die ein Rohr oder ein Stab parallel zu dem Randabschnitt eingeschoben sein kann. Weiterhin können - vorzugsweise an einem oder mehreren der Randabschnitte - Ösen angeordnet sein, durch welche die Schutzvorrichtung an zusätzlich angebrachten Haltevorrichtungen oder an sonstigen festen Elementen der Plattenaufteilanlage befestigt sein kann.

Eine vorteilhafte Ausgestaltung der Plattenaufteilanlage zeichnet sich dadurch aus, dass das Tragwerk ein Gestänge aufweist, an dem das Gewebe, die Plane oder die Folie gehalten ist, und welches steckbare Einzelelemente und/oder fächerartig oder fachwerkartig ausklappbare Einzelelemente und/oder telekopierbare Einzelelemente umfasst. Hierdurch wird die Montage der Schutzvorrichtung erheblich vereinfacht und beschleunigt.

Ferner wird vorgeschlagen, dass das Tragwerk mindestens ein Seil aufweist, an dem das Gewebe, die Plane oder die Folie gehalten ist. Diese gestattet ebenfalls eine Vereinfachung der Montage und die Einsparung von Kosten.

Möglich ist auch, dass das Gewebe, die Plane oder die Folie mindestens eine vorzugsweise verschließbare Öffnung aufweist. Hierdurch wir beispielsweise zu Wartungszwecken ein Zugang zum Zuführtisch gewährt.

Weiterhin wird vorgeschlagen, dass die Schutzvorrichtung mindestens ein Kederelement mit mindestens einer Kederschiene umfasst, an welcher das Gewebe, die Plane oder die Folie aufgespannt werden kann. Damit wird vorteilhaft die Möglichkeit geschaffen, dem an sich vergleichsweise dünnen Gewebe eine genügende Festigkeit zu verleihen, indem das Gewebe mittels der Kederschiene an dem Kederelement aufgespannt ist. Entsprechend weist das Gewebe an mindestens einer Gewebekante einen Keder auf, der den Randbereich des Gewebes verdickt und verstärkt und das (seitliche) Einschieben in die Kederschiene erleichtert. Damit kann außerdem nach der Montage eine gute Festigkeit und Straffheit erreicht werden, und Kerbwirkungen der Kederschiene am Geweberand kann vorgebeugt werden.

Eine Ausgestaltung der Erfindung sieht vor, dass das Kederelement das Gewebe, die Plane oder die Folie an zwei in unterschiedlichen Richtungen wirkenden Kederschienen aufspannen kann, und dass die Schutzvorrichtung nach der Art eines Zauns fortlaufend aus jeweils einem Kederelement und jeweils einem Stück Gewebe, Plane oder Folie gebildet ist. Dabei können die Kederelemente beispielsweise vertikal zur Ebene des Zuführtisches an dem Zuführtisch angeordnet sein, und somit die Schutzvorrichtung an dem Zuführtisch und/oder an sonstigen festen Elementen der Plattenaufteilanlage befestigt sein. Damit wird ein besonders kostengünstiger Aufbau der Schutzvorrichtung erreicht, da keine sonstigen Haltevorrichtungen, Haken oder dergleichen benötigt werden.

Eine weitere Ausgestaltung der erfindungsgemäßen Plattenaufteilanlage bzw. der Schutzvorrichtung sieht vor, dass die Schutzvorrichtung mindestens ein Wandelement umfasst, welches mindestens zwei Kederelemente umfasst, zwischen denen das Gewebe, die Plane oder die Folie aufgespannt ist, und dass Stirnseiten der Kederelemente an mindestens einer Halterung befestigt sind, und dass das Wandelement zwischen zwei Halterungen angeordnet ist. Die Halterung ist dabei an dem Zuführtisch und/oder an sonstigen festen Elementen der Plattenaufteilanlage befestigt. Damit können die Kederelemente auf ihre Aufgabe, das Gewebe zu halten und zu spannen, beschränkt werden, wodurch diese gegebenenfalls leichter bauen und kostengünstiger sind. Zudem kann das Gewebe in dieser Ausgestaltung allseitig an den Rändern, und zwar teils durch die Kederelemente, teils durch die Halterungen, begrenzt werden, wodurch die Schutzvorrichtung besonders robust wird. Außerdem ist es möglich, das (im Wesentlichen rechteckig geschnittene) Gewebe an allen vier Rändern in jeweils einer Kederschiene zu führen, wodurch das so hergestellte Wandelement, relativ verwindungssteif sein kann.

Ergänzend ist vorgesehen, dass die Halterung mindestens ein Langloch aufweist, mittels dessen ein Abstand der Kederelemente in der Ebenen-Richtung, in welcher das Gewebe, die Plane oder die Folie aufgespannt ist, einstellbar ist. Damit wird eine besonders einfache Möglichkeit beschrieben, um Toleranzen des Gewebes und/oder der Kederelemente auszugleichen, so dass das Gewebe definiert gespannt werden kann. Ebenso kann nach einer eventuellen Dehnung des Gewebes ein erneuter Spannvorgang erfolgen.

Eine weitere Ausgestaltung der Plattenaufteilanlage sieht vor, dass die Schutzvorrichtung nach der Art eines Zauns fortlaufend aus jeweils einem Wandelement und jeweils einer Halterung gebildet ist. Ähnlich zu der weiter oben beschriebenen Ausgestaltung ergibt sich damit eine weitere Möglichkeit, die Schutzvorrichtung sozusagen modular auszuführen.. Weiterhin ist es denkbar, an einer Halterung auch drei oder gar vier Wandelemente anzuordnen, so dass "Abzweigungen" oder Unterteilungen möglich sind.

Die Schutzvorrichtung ist besonders nützlich, wenn das Gewebe, die Plane oder die Folie ein Netz oder ein durchbrochenes textiles Material oder ein gelochtes Kunststoffmaterial ist. Damit kann eine wünschenswerte Transparenz beziehungsweise Teiltransparenz der Schutzvorrichtung auch bei einem an sich nicht transparenten Material auf natürliche bzw. vor allem einfache Weise geschaffen werden.

Die Schutzvorrichtung kann besonders robust gestalten werden, wenn das Gewebe, die Plane oder die Folie in den Kederschienen mittels Kedern geführt ist, welche einen im Wesentlichen runden Querschnitt aufweisen. Ein runder Querschnitt des Keders ist besonders einfach herstellbar und bietet zudem wenige Angriffsflächen für Kerbwirkungen.

Ergänzend wird vorgeschlagen, dass die Schutzvorrichtung die Plattenaufteilanlage und/oder den Zuführtisch an drei Seiten umschließt. Damit kann eine besonders häufige Ausführungsform einer Plattenaufteilanlage an den drei zugänglichen Seiten erfindungsgemäß gut geschützt bzw. gesichert werden.

Die Erfindung kann werbewirksam eingesetzt werden, wenn das Gewebe, die Plane oder die Folie mindestens bereichsweise bedruckt ist. Hierzu sind vielfältige Möglichkeiten denkbar, insbesondere kann ein Markenzeichen des Herstellers der Plattenaufteilanlage oder des Käufers auf der Schutzvorrichtung abgebildet sein. Dies ist besonders gut bei halbtransparenten Netzen o.ä. realisierbar.

Vorgeschlagen wird ferner, dass die Plattenaufteilanlage eine Vorrichtung aufweist, welche erkennt, wenn die Funktion der Schutzvorrichtung unterbrochen wurde. Eine solche Vorrichtung kann beispielsweise mit der zentralen Steuerung verbunden sein und den Betrieb der Plattenaufteilanlage oder zumindest der dem Zuführtisch zugeordneten Elemente stoppen, wenn erkannt wird, dass die Zugangssperre durch die Schutzvorrichtung nicht mehr gewährleistet ist.

Eine Weiterbildung zeichnet sich dadurch aus, dass das Gewebe, die Plane oder die Folie Meterware ist, und dass das Tragwerk aus standardisierten Teilen ausgewählt ist. Die Schutzvorrichtung wird damit sozusagen aus einem Baukasten vorgegebener Teile zusammengebaut und vor Ort an die Erfordernisse und Kundenwünsche angepasst. Die Bereitstellung standardisierter Teile senkt die Kosten, die Anpassung vor Ort ermöglicht eine schnelle Reaktion auf besondere Anforderungen.

Nachfolgend werden beispielhafte Ausführungsformen der Erfindung unter Bezugnahme auf die Zeichnung erläutert. In der Zeichnung zeigen:
Figur 1 eine schematische Darstellung einer ersten Ausführungsform einer Schutzvorrichtung einer Plattenaufteilanlage;
Figur 2 eine Variante der Ausführungsform nach Figur 1;
Figur 3 eine schematische Darstellung einer zweiten Ausführungsform einer Schutzvorrichtung einer Plattenaufteilanlage;
Figur 4 eine ausschnittsweise Darstellung einer Schutzvorrichtung einer Plattenaufteilanlage mit zwei Wandelementen und einer Halterung;
Figur 5 eine Detailansicht zu der Figur 4;
Figur 6 eine Plattenaufteilanlage nach der ersten Ausführungsform in einer perspektivischen Darstellung;
Figur 7 eine Plattenaufteilanlage ähnlich zu der Figur 6 in einer zweiten Perspektive;
Figur 8 eine Plattenaufteilanlage nach der Figur 6 in einer seitlichen Ansicht VIII der Figur 6; und
Figur 9 eine Plattenaufteilanlage nach der zweiten Ausführungsform in einer Ansicht ähnlich der Figur 8.

Es werden für funktionsäquivalente Elemente und Größen in allen Figuren auch bei unterschiedlichen Ausführungsformen die gleichen Bezugszeichen verwendet.

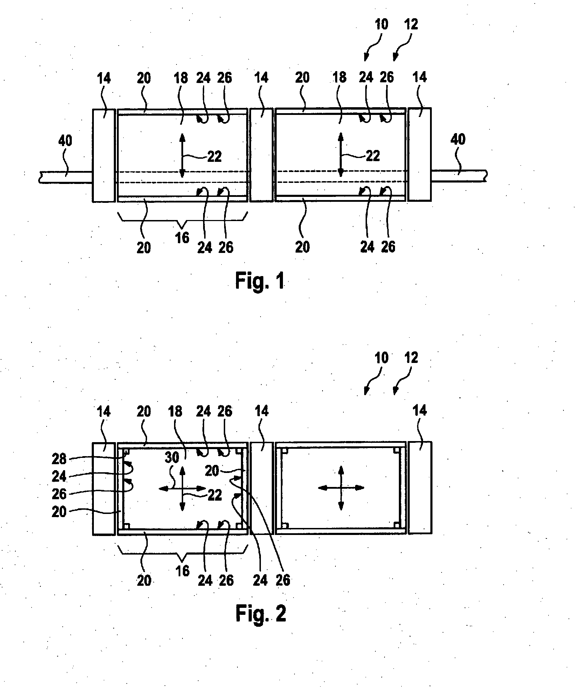

Die Figur 1 zeigt schematisch eine Schutzvorrichtung 10 einer in dieser Figur noch nicht näher dargestellten Plattenaufteilanlage 12 in der ersten Ausführungsform. Drei in der Zeichnung vertikale Halterungen 14 sind an einem nur andeutungsweise dargestellten Zuführtisch 40 der Plattenaufteilanlage 12 voneinander beabstandet angeordnet und halten vorliegend zwei gleiche Wandelemente 16 nach der Art eines Zauns. Die Halterungen 14 bilden insoweit ein Tragwerk 15 für die Wandelemente 16. Das Wandelement 16 umfasst ein Gewebe 18, welches zwischen jeweils zwei Kederelementen 20 in Bezug auf die Figur 1 vertikal aufgespannt ist. Anstelle von Kederelementen können in einer nicht gezeigten Ausführungsform auch Seile gespannt sein, zwischen denen das Gewebe 18 aufgespannt ist.

Die Spannrichtung des Gewebes 18 wird in der Zeichnung durch einen Doppelpfeil 22 veranschaulicht. Das Gewebe 18 wird mittels (nicht sichtbarer) Kedern 24 in Kederschienen 26 der Kederelemente 20 gehalten. Es versteht sich, dass die Schutzvorrichtung 10 auch aus einem oder aus mehr als zwei Wandelementen 16 aufgebaut sein kann.

Die Figur 2 zeigt eine zu der Figur 1 vergleichbare Schutzvorrichtung 10. Im Unterschied zu der Figur 1 umfassen die Wandelemente 16 jeweils vier Kederelemente 20 und vier Kederschienen 26. Entsprechend weist das Gewebe 18 vier Kedern 24 auf.

Kleine Aussparungen 28 in den vier Ecken des Gewebes 18 und entsprechend leicht verkürzte Kedern 24 ermöglichen es, das Gewebe 18 in den Kederschienen 26 zu montieren. Die Doppelpfeile 22 und 30 deuten an, dass das Gewebe 18 sowohl vertikal als auch horizontal gespannt ist.

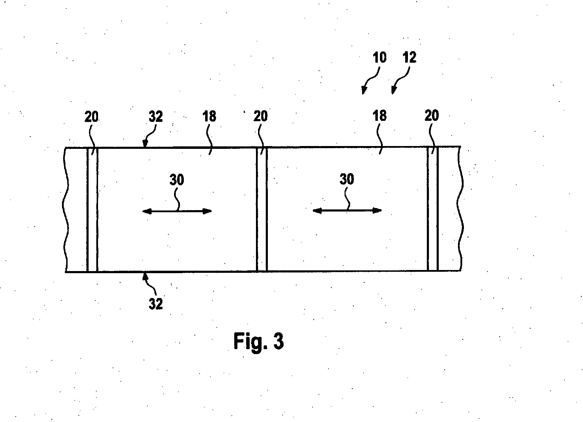

Die Figur 3 zeigt schematisch und auszugsweise eine Schutzvorrichtung 10 in der zweiten Ausführungsform. Drei sich in der Zeichnung vertikal erstreckende Kederelemente 20 spannen vorliegend zwei gleichartige Abschnitte des Gewebes 18 entsprechend dem Doppelpfeil 30 horizontal auf.

Ränder 32 des Gewebes 18 liegen frei, welche - abhängig von der Spannung des Gewebes 18 - gegebenenfalls zur Mitte des Gewebes 18 hin gekrümmt sein können. Dies ist in der Zeichnung jedoch nicht dargestellt. Die Kederelemente 20 sind an dem - in Bezug auf die Zeichnung horizontalen - Zuführtisch 40 der Plattenaufteilanlage 12 montiert. Der Zuführtisch 40 ist in der Figur 3 jedoch nicht dargestellt.

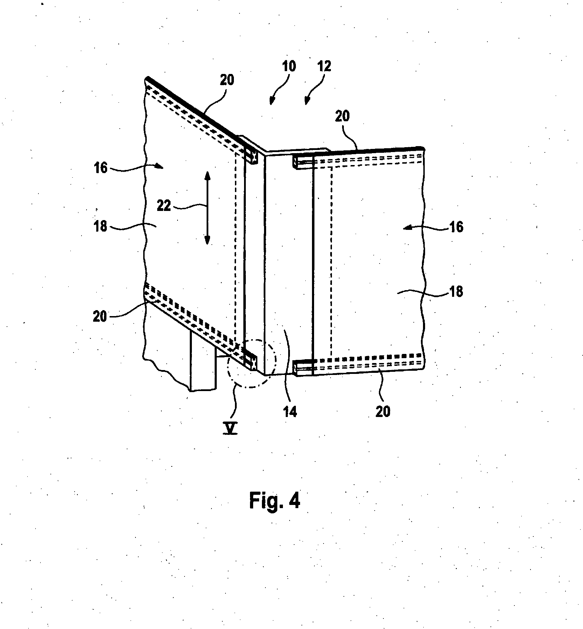

Figur 4 zeigt einen Ausschnitt der Schutzvorrichtung 10 der Plattenaufteilanlage 12. Vorliegend sind zwei Wandelemente 16 mit einer sich vertikal erstreckenden Halterung 14 über Eck angeordnet. Der Doppelpfeil 22 deutet die Spannungsrichtung des Gewebes 18 an.

Die Kederelemente 20 sind vorliegend jeweils mit einem Endabschnitt auf einer Außenseite der Halterung 14 angeordnet. Die Befestigung der Kederelemente 20 an der Halterung 14 erfolgt mittels in der Halterung 14 vorhandenen Langlöchern. Diese sind in der Zeichnung der Figur 4 jedoch nicht dargestellt.

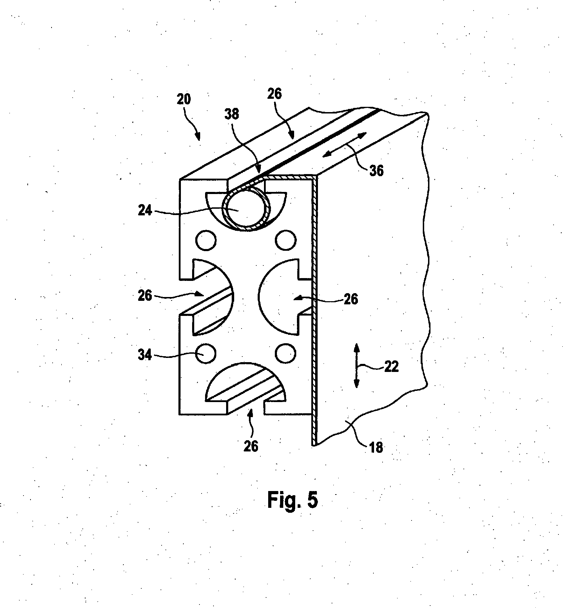

Figur 5 zeigt eine Detailansicht V der Figur 4 schematisch in einer vergrößerten und um 180° gedrehten Darstellung. Das Kederelement 20 weist in der Figur 5 insgesamt vier in unterschiedlichen Richtungen wirkende Kederschienen 26 auf, von denen vorliegend nur die in der Zeichnung obere Kederschiene 26 verwendet wird. Vier Bohrungen 34 sparen Material des Kederelements 20 aus und können gegebenenfalls auch für eine stirnseitige Befestigung des Kederelements 20 verwendet werden.

Der Keder 24 weist vorliegend einen in etwa runden Querschnitt auf und wird bei der Montage zusammen mit einem am Keder 24 fest angeordneten Randbereich des Gewebes 18 in Richtung eines Doppelpfeils 36 in die Kederschiene 26 eingeschoben. Ein Öffnungsmaß des in der Zeichnung der Figur 5 oberhalb des Keders 24 angeordneten Längsschlitzes 38 ist kleiner als der Durchmesser des Keders 24, so dass der Keder 24 sicher in der Kederschiene 26 gehalten werden kann.

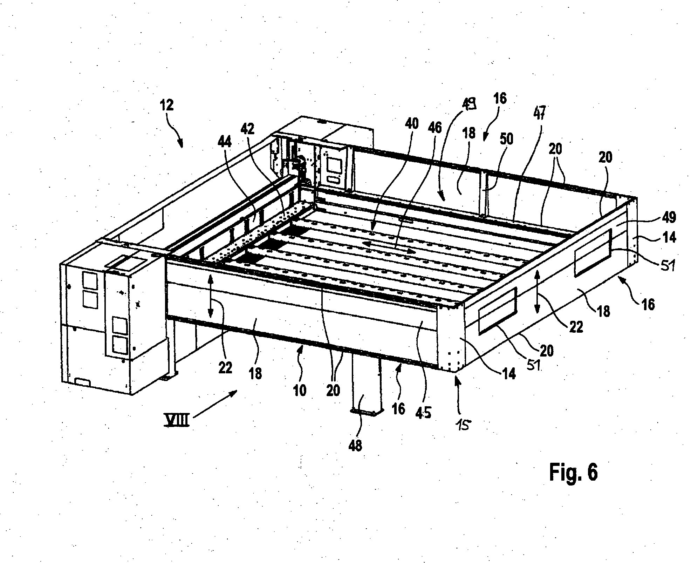

Figur 6 zeigt eine Plattenaufteilanlage 12 mit der ersten Ausführungsform (siehe Figur 1) der Schutzvorrichtung 10 in einer perspektivischen Darstellung. Die Plattenaufteilanlage 12 weist vorliegend unter anderem einen Zuführtisch 40 mit in der Zeichnung lediglich angedeuteten Rollenschienen auf, sowie einen Maschinentisch 42 und einen vertikal beweglichen Druckbalken 44. In dem Maschinentisch 42 ist ein Sägeschlitz vorhanden, durch den ein Sägeblatt eine auf dem Maschinentisch 42 und dem Zuführtisch 40 liegende Platte bearbeiten kann. Ein nicht gezeigter Programmschieber einer Vorschubvorrichtung führt die Platten mittels Spannzangen der Säge zu. Dies ist in der Zeichnung durch den Doppelpfeil 46 angedeutet. Der aus Rollenschienen gebildete Zuführtisch 40 ruht unter anderem auf zwei Ständern 48, von denen nur einer in der Zeichnung sichtbar ist, auf einem nicht dargestellten Fußboden.

Der Programmschieber umfasst beispielsweise einen sich quer zur Vorschubrichtung 46 erstreckenden Träger, an dem die Spannzangen befestigt sind, und der im Bereich seiner beiden Enden Rollen aufweist, die auf parallel zur Vorschubrichtung 46 verlaufenden Schienen geführt sind. Diese Schienen sind beispielsweise auf auf den Ständern 48 gehaltenen und seitlich vom Zuführtisch 40 angeordneten Längsträgern 47 befestigt, die insoweit zusammen mit dem Zuführtisch 40 zu einem stationären Unterbau 49 für den Programmschieber gehören.

Die Schutzvorrichtung 10 umschließt den Zuführtisch 40 der Plattenaufteilanlage 12 vorliegend an drei Seiten nach der Art eines Zauns. Zwei Halterungen 14 ermöglichen ähnlich zur Darstellung der Figur 4 eine Anordnung der Wandelemente 16 über Eck. Ähnlich zu der Figur 1 weisen die Wandelemente 16 - in der Zeichnung jeweils oben und unten - zwei Kederelemente 20 auf, zwischen denen das Gewebe 18 in Richtung des Doppelpfeils 22 gespannt ist.

Vorliegend ist das Gewebe 18 ein PVC-Netzgitter, dessen Feinstruktur in der Zeichnung jedoch nicht dargestellt ist. Ein Bereich 45 des Gewebes 18 ist an der vom Zuführtisch 40 abgewandten Seite bedruckt.

In etwa der Mitte der Wandelemente 16 ist jeweils eine vertikale Stütze 50 angeordnet, die ebenfalls zu dem Tragwerk 15 gehört, und von denen in der Darstellung der Figur 6 nur eine sichtbar ist. Wegen der vorliegend vergleichsweise großen Ausdehnung der Wandelemente 16 quer zur Spannung des Gewebes 18 kann die Stütze 50 ein "Zusammenziehen" des Gewebes 18 und der Kederelemente 20 verhindern. Wie aus Figur 6 ersichtlich ist, sind die Stütze(n) 50 und die Eckelemente 14 am Unterbau 49 der Vorschubvorrichtung befestigt. Besonders bevorzugt ist es, wenn der Unterbau 49 sogar ein integraler Bestandteil des Tragwerks 15 ist. Die unteren Kederelemente 20 können beispielsweise direkt am Unterbau 49 verschraubt sein.

Wie ferner aus Figur 6 ersichtlich ist, weist die Schutzvorrichtung im Bereich ihrer Stirnseite im Gewebe zwei fensterartige Öffnungen 51 auf, welche beispielsweise eine einfachen Zugang zum Zuführtisch für Wartungszwecke ermöglichen. Dabei wird dennoch durch die Schutzvorrichtung 10 verhindert, dass eine Person versehentlich auf den Zuführtisch 40 langt, während ein Werkstück vom Programmschieber längs des Pfeils 46 bewegt wird. Anstelle der Öffnungen 51 könnte an diesen Stellen das Gewebe 18 auch vollständig unterbrochen sein. Vorteilhafterweise sind an diesen Stellen ebenfalls senkrechte Stützen angeordnet, welche das Tragwerk stabilisieren.

Zur Montage kann das Gewebe 18 beispielsweise als Rollenware auf die Baustelle transportiert und erst dort entsprechend den Erfordernissen abgelängt werden. Ähnliches gilt auch für die Halterungen 14 und Stützen 50. Diese können beispielsweise aus zusammensteckbaren

Einzelelementen gebildet sein, die erst auf der Baustelle entsprechend den gewünschten Abmessungen zusammengesteckt werden. Zum gleichen Zweck wäre auch die Verwerdung von teleskopierbaren Elementen denkbar.

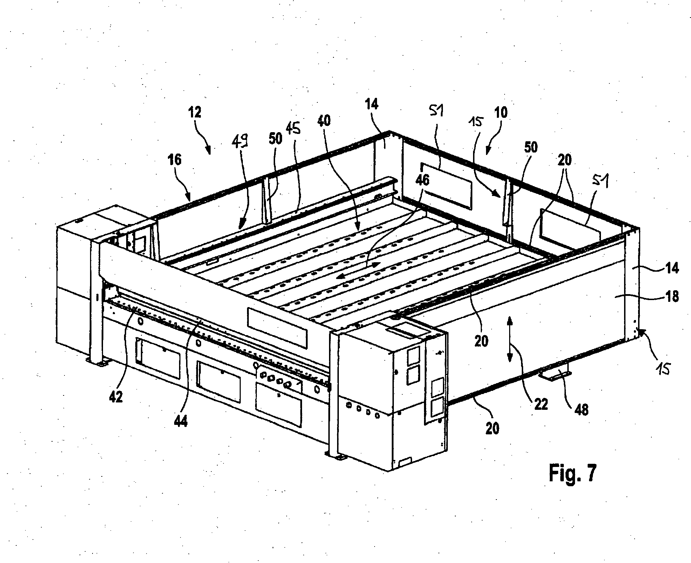

Figur 7 zeigt eine Plattenaufteilanlage 12 ähnlich zu der Figur 6 in einer zweiten Perspektive. Im Unterschied dazu weisen das Gewebe 18 und entsprechend der Abstand jeweils zweier paralleler Kederelemente 20 in Richtung des Doppelpfeils 22 ein größeres Maß auf.

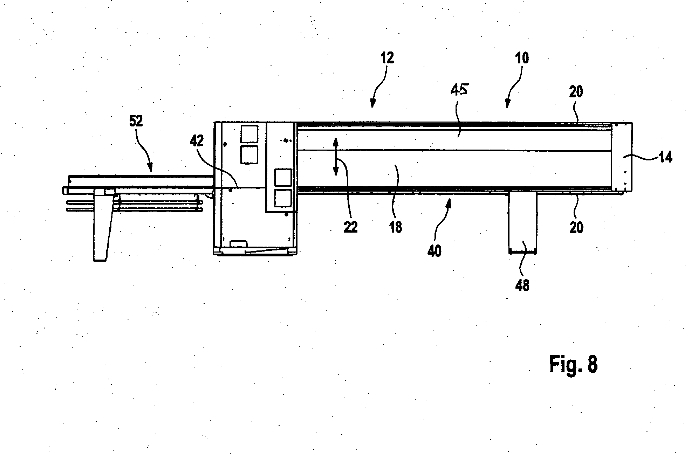

Figur 8 zeigt eine Seitenansicht VIII der Plattenaufteilanlage 12 nach der Figur 6. In der Zeichnung ist links vom Maschinentisch 42 ein Entnahmetisch 52 dargestellt.

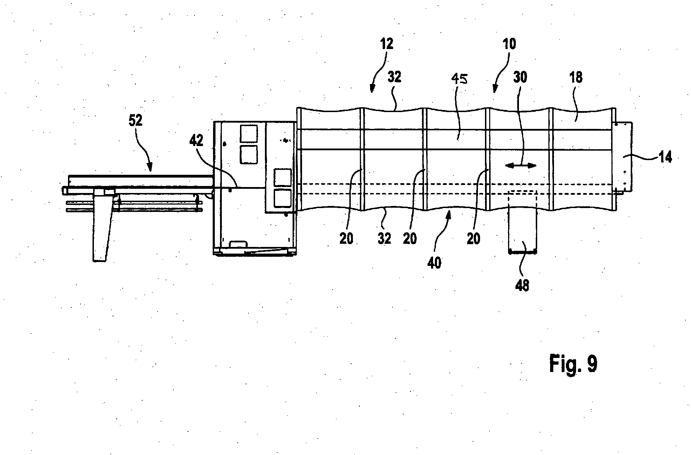

Figur 9 zeigt eine Seitenansicht VIII ähnlich zu der Figur 8, wobei die Schutzvorrichtung 10 nach der zweiten Ausführungsform ausgeführt ist. Das Gewebe 18 ist im Wesentlichen in der Richtung des Doppelpfeils 30 horizontal gespannt. Die Ränder 32 sind als Folge der Spannung leicht zur Mitte des Gewebes 18 hin gekrümmt.

In einer nicht dargestellten Ausführungsform werden die Halterungen und Stützen, also das Tragwerk der Schutzvorrichtung, mindestens zum Teil durch fächer- oder fachwerkartig ausklappbare Elemente gebildet, ähnlich einem Regenschirm oder einem Faltverdeck bei einem Kraftfahrzeug. Dies erleichtert die Montage erheblich.

## Patentansprüche

1. Plattenaufteilanlage (12) mit einem Zuführtisch (40) zum Auflegen mindestens eines plattenförmigen Werkstücks und mit einer Vorschubvorrichtung zum Bewegen des auf dem Zuführtisch (40) liegenden Werkstücks, die an einem stationären Unterbau (49) verfahrbar gehalten ist, wobei die Plattenaufteilanlage (12) mindestens bereichsweise eine wandartige Schutzvorrichtung (10) aufweist, welche den Zugang zum Zuführtisch (40) zumindest beschränkt, **dadurch gekennzeichnet, dass** die Schutzvorrichtung (10) dazu ausgebildet ist, um den Zuführtisch (40) der Plattenaufteilanlage (12) vor einem unbeabsichtigten Eingriff durch Menschen zu schützen, und dass die Schutzvorrichtung ein Tragwerk (15) und mindestens bereichsweise ein an diesem gehaltenes Gewebe (18), eine an diesem gehaltene Plane oder eine an diesem gehaltene Folie umfasst, und dass mindestens ein Bereich des Tragwerks (15) an dem Unterbau (49) gehalten ist.

2. Plattenaufteilanlage (12) nach Anspruch 1, **dadurch gekennzeichnet, dass** das Tragwerk (15) eine Mehrzahl von an dem Unterbau (49) befestigten, vorzugsweise eingesteckten oder geschraubten Pfosten (14, 50) aufweist, an denen das Gewebe (18), die Folie oder Plane gehalten ist.

3. Plattenaufteilanlage (12) nach Anspruch 1, **dadurch gekennzeichnet, dass** das Gewebe (18), die Plane oder die Folie zumindest etwas und zumindest bereichsweise durchsichtig, insbesondere ein Netz, beispielsweise ein PVC-Netzgitter, oder ein durchbrochenes textiles Material oder ein gelochtes Kunststoffmaterial ist.

4. Plattenaufteilanlage (12) nach einem der vorhergehenden Ansprüche, **dadurch gekennzeichnet, dass** das Tragwerk (15) eine Aufspanneinrichtung umfasst, an der das Gewebe (18), die Plane oder die Folie aufgespannt ist.

5. Plattenaufteilanlage (12) nach einem der vorhergehenden Ansprüche, **dadurch gekennzeichnet, dass** das Tragwerk (15) ein Gestänge aufweist, an dem das Gewebe (18), die Plane oder die Folie gehalten ist, und welches steckbare Einzelelemente und/oder fächerartig oder fachwerkartig ausklappbare Einzelelemente und/oder telekopierbare Einzelelemente umfasst.

6. Plattenaufteilanlage (12) nach einem der vorhergehenden Ansprüche, dass das Tragwerk (15) mindestens ein Seil aufweist, an dem das Gewebe (18), die Plane oder die Folie gehalten ist.

7. Plattenaufteilanlage (12) nach einem der vorhergehenden Ansprüche, **dadurch gekennzeichnet, dass** das Gewebe (18), die Plane oder die Folie mindestens eine vorzugsweise verschließbare Öffnung (51) aufweist.

8. Plattenaufteilanlage (12) nach einem der vorhergehenden Ansprüche, **dadurch gekennzeichnet, dass** die Schutzvorrichtung (10) mindestens ein Kederelement (20) mit mindestens einer Kederschiene (26) umfasst, an welcher das Gewebe (18), die Plane oder die Folie aufgespannt werden kann.

9. Plattenaufteilanlage (12) nach Anspruch 5, **dadurch gekennzeichnet, dass** das Kederelement (20) das Gewebe (18), die Plane oder die Folie an zwei in unterschiedlichen Richtungen wirkenden Kederschienen (26) aufspannen kann, und dass die Schutzvorrichtung (10) nach der Art eines Zauns fortlaufend aus jeweils einem Federelement (20) und jeweils einem Stück Gewebe (18), Plane oder Folie gebildet ist.

10. Plattenaufteilanlage (12) nach Anspruch 7 oder 8, **dadurch gekennzeichnet, dass** die Schutzvorrichtung (10) nach der Art eines Zauns fortlaufend aus jeweils einem Wandelement (16) und jeweils einer Halterung (14) gebildet ist.

11. Plattenaufteilanlage (12) nach wenigstens einem der vorhergehenden Ansprüche, **dadurch gekennzeichnet, dass** das Gewebe (18), die Plane oder die Folie mindestens bereichsweise bedruckt ist.

12. Plattenaufteilanlage (12) nach einem der vorhergehenden Ansprüche, **dadurch gekennzeichnet, dass** sie eine Vorrichtung aufweist, welche erkennt, wenn die Funktion der Schutzvorrichtung unterbrochen wurde.

13. Plattenaufteilanlage (12) nach einem der vorhergehenden Ansprüche, **dadurch gekennzeichnet, dass** das Gewebe (18), die Plane oder die Folie Meterware ist, und dass das Tragwerk (15) aus standardisierten Teilen ausgewählt ist.

## Claims

1. A panel cutting system (12) having a feeder table (40) on which at least one panel-like workpiece is placed and having a conveyor device for moving the workpiece lying on the feeder table (40), which is retained movably on a stationary undercarriage (49), the panel cutting system (12) at least in some regions having a wall-like guard device (10), which at least limits the access to the feeder table (40), **characterized in that** the guard device (10) is embodied for protecting the feeder table (40) of the panel cutting system (12) against unintended access by human beings, and that the guard device includes a load-bearing structure (15) and at least in some regions a fabric (18), a tarpaulin or a sheet retained on the load-bearing structure, and that at least one region of the load-bearing structure (15) is retained on the undercarriage (49).

2. The panel cutting system (12) of claim 1, **characterized in that** the load-bearing structure (15) has a plurality of preferably inserted or screwed-in posts (14, 50), secured to the undercarriage (49), on which posts the fabric (18), the sheet or tarpaulin is retained.

3. The panel cutting system (12) of claim 1, **characterized in that** the fabric (18), tarpaulin or sheet is at least somewhat and in at least some regions transparent, in particular being a piece of netting, for instance a PVC mesh or a pierced textile material or a perforated plastic material.

4. The panel cutting system (12) of one of the foregoing claims, **characterized in that** the load-bearing structure (15) includes a clamping device, on which the fabric (18), the tarpaulin or the sheet is clamped.

5. The panel cutting system (12) of one of the foregoing claims, **characterized in that** the load-bearing structure (15) has a rod linkage, on which the fabric (18), tarpaulin or sheet is retained, and which includes insertable individual elements and/or individual elements that can be unfolded in fanlike or trellislike fashion and/or telescoping individual elements.

6. The panel cutting system (12) of one of the foregoing claims, that the load-bearing structure (15) has at least one rope on which the fabric (18), tarpaulin or sheet is retained.

7. The panel cutting system (12) of one of the foregoing claims, **characterized in that** the fabric (18), tarpaulin or sheet has at least one, preferably closeable, opening (51).

8. The panel cutting system (12) of one of the foregoing claims, **characterized in that** the guard device (10) has at least one piping element (20) with at least one piping track (26), on which track the fabric (18), tarpaulin or sheet can be clamped.

9. The panel cutting system (12) of claim 5, **characterized in that** the piping element (20) can spread out the fabric (18), tarpaulin or sheet on two piping tracks (26) acting in different directions, and that the guard device (10) is formed successively, in the manner of a fence, from one piping element (20) each and one piece of fabric (18), tarpaulin or sheet each.

10. The panel cutting system (12) of claim 7 or 8, **characterized in that** the guard device (10) is formed successively, in the manner of a fence, of one wall element (16) each and one mounting (14) each.

11. The panel cutting system (12) of at least one of the foregoing claims, **characterized in that** the fabric (18), tarpaulin or sheet is imprinted in at least some regions.

12. The panel cutting system (12) of one of the foregoing claims, **characterized in that** it has a device which recognizes if the function of the guard device has been disrupted.

13. The panel cutting system (12) of one of the foregoing claims, **characterized in that** the fabric (18), tarpaulin or sheet is yard goods, and that the load-bearing structure (15) is selected from standardized parts.

## Revendications

1. Installation à diviser des plaques (12) comprenant une table d'alimentation (40) pour placer au moins une pièce à usiner en forme de plaque, ainsi qu'un dispositif d'avance pour déplacer la pièce à usiner se trouvant sur ladite table d'alimentation (40), qui est maintenu à déplacement sur un bâti (49) stationnaire, ladite installation à diviser des plaques (12) présentant au moins par zones un dispositif de protection (10) de type paroi qui au moins limite l'accès à la table d'alimentation (40), **caractérisée par le fait que** ledit dispositif de protection (10) est adapté pour protéger la table d'alimentation (40) de l'installation à diviser des plaques (12) contre une intervention non intentionnelle par des hommes, et que ledit dispositif de protection comprend une structure porteuse (15) et au moins par zones un tissu (18) retenu sur celle-ci, une bâche retenue sur celle-ci ou une feuille retenue sur celle-ci, et qu'au moins une zone de ladite structure porteuse (15) est maintenue sur ledit bâti (49).

2. Installation à diviser des plaques (12) selon la revendication 1, **caractérisée par le fait que** ladite structure porteuse (15) présente une pluralité de poteaux (14, 50) fixés sur ledit bâti (49), de préférence engagés ou vissés, sur lesquels le tissu (18), la feuille ou la bâche est retenu(e).

3. Installation à diviser des plaques (12) selon la revendication 1, **caractérisée par le fait que** le tissu (18), la bâche ou la feuille est transparent(e) au moins un peu et au moins par zones, en particulier il/elle est un filet, par exemple une grille à mailles en PVC, ou une matière textile ajourée ou une matière plastique perforée.

4. Installation à diviser des plaques (12) selon l'une quelconque des revendications précédentes, **caractérisée par le fait que** ladite structure porteuse (15) comprend un dispositif de fixation sur lequel le tissu (18), la bâche ou la feuille est fixé(e).

5. Installation à diviser des plaques (12) selon l'une quelconque des revendications précédentes, **caractérisée par le fait que** la structure porteuse (15) présente des tringles sur lesquelles le tissu (18), la bâche ou la feuille est retenu(e) et qui comprennent des éléments individuels à emboitement et/ou des éléments individuels aptes à être dépliés à la manière d'éventail ou de colombage et/ou des éléments individuels télescopiques.

6. Installation à diviser des plaques (12) selon l'une quelconque des revendications précédentes, que la structure porteuse (15) présente au moins un câble sur lequel le tissu (18), la bâche ou la feuille est retenu(e).

7. Installation à diviser des plaques (12) selon l'une quelconque des revendications précédentes, **caractérisée par le fait que** le tissu (18), la bâche ou la feuille présente au moins une ouverture (51) de préférence apte à être fermée.

8. Installation à diviser des plaques (12) selon l'une quelconque des revendications précédentes, **caractérisée par le fait que** ledit dispositif de protection (10) comprend au moins un élément pour bourrelet (20) ayant au moins un rail pour bourrelet (26) sur lequel le tissu (18), la bâche ou la feuille peut être fixé(e).

9. Installation à diviser des plaques (12) selon la revendication 5, **caractérisée par le fait que** ledit élément pour bourrelet (20) peut fixer le tissu (18), la bâche ou la feuille sur deux rails pour bourrelet (26) agissant dans des directions différentes, et que ledit dispositif de protection (10) est constitué de façon continue, à la manière d'une clôture, par respectivement un élément pour bourrelet (20) et respectivement une pièce de tissu (18), de bâche ou de feuille.

10. Installation à diviser des plaques (12) selon la revendication 7 ou 8, **caractérisée par le fait que** ledit dispositif de protection (10) est constitué de façon continue, à la manière d'une clôture, par respectivement un élément de paroi (16) et respectivement un support (14).

11. Installation à diviser des plaques (12) selon l'une au moins des revendications précédentes, **caractérisée par le fait que** le tissu (18), la bâche ou la feuille est imprimé(e) au moins par zones.

12. Installation à diviser des plaques (12) selon l'une quelconque des revendications précédentes, **caractérisée par le fait qu'**elle présente un dispositif qui détecte quand la fonction du dispositif de protection a été interrompue.

13. Installation à diviser des plaques (12) selon l'une quelconque des revendications précédentes, **caractérisée par le fait que** le tissu (18), la bâche ou la feuille est de la marchandise au mètre et que ladite structure porteuse (15) est choisie dans des parties standardisées.
